(19) Europäisches Patentamt
European Patent Office
Office européen des brevets

(11) Publication number: **0 369 255 A2**

(12) **EUROPEAN PATENT APPLICATION**

(21) Application number: **89120366.3**

(22) Date of filing: **03.11.89**

(51) Int. Cl.5: **C08L 83/07, C08K 5/14, //(C08L83/07,83:08)**

(30) Priority: **14.11.88 US 270574**

(43) Date of publication of application: **23.05.90 Bulletin 90/21**

(84) Designated Contracting States: **BE DE FR GB IT NL**

(71) Applicant: **GENERAL ELECTRIC COMPANY**
**1 River Road**
**Schenectady, N.Y. 12345(US)**

(72) Inventor: **Doin, James Edward**
**R.D. 1, Box 97**
**Hoosick Falls New York 12090(US)**
Inventor: **Evans, Edwin Robert**
**9 Rodriso Court**
**Clifton Park New York 12065(US)**

(74) Representative: **Schüler, Horst, Dr.**
**Kaiserstrasse 69**
**D-6000 Frankfurt/Main 1(DE)**

(54) **Self-lubricating heat curable silicone rubber compositions.**

(57) Self-bleeding heat curable silicone rubbers are provided which comprise 100 parts of substantially linear vinyl-containing polysiloxanes of the formula $R_aSiO_{4-a/2}$, 0.1 to 10 parts of an alkyl peroxide curing catalyst, and a bleeding amount of a self-bleed additive comprising a silanol-terminated diorganosiloxane telomer of the formula (I)

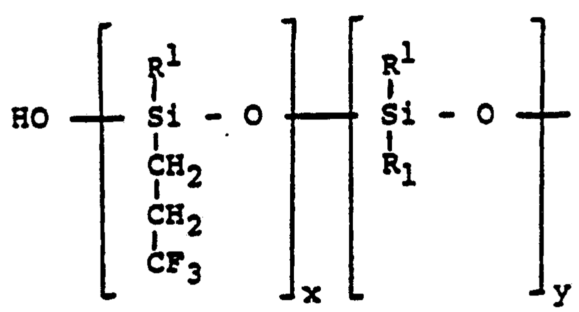

(I)

wherein each $R^1$ is methyl, x is about 3, and y is zero.

EP 0 369 255 A2

# SELF-LUBRICATING HEAT CURABLE SILICONE RUBBER COMPOSITIONS

## BACKGROUND OF THE INVENTION

### Field of the Invention

This invention relates to the field of self-bleeding heat curable silicone rubber compositions.

### Description of the Prior Art

Heat cured silicone rubbers (HCR) have good thermal resistance and are useful over wide temperature ranges. In many applications such as in components of automobile ignition systems it has been found that "self bleeding" compositions on which a thin film of silicone fluid forms after cure are useful because the thin film affords self-lubricating properties.

Silicone fluids which have poor or limited compatibility with, or, solubility in silicone rubbers have been utilized as "self bleeding" additives in such heat curable silicone rubber compositions. Alkoxy-endstopped dimethylsiloxy-, diphenylsiloxy-copolymers which comprise a significant content of diphenylsiloxy groups and have viscosities of about 25 cps or less are among the compositions which have proven useful for this purpose in substantially "all-methyl" HCR's, i.e. rubbers comprising primarily diemthylsiloxy groups. The presence of diphenylsiloxy groups causes the additive to be sufficiently incompatible with the (di)-methylsiloxane rubber that on standing after curing it usually phase-separates and migrates to the surface "blooming" or "bleeding" to form a thin oily layer of the additive on the surface of the silicone rubber article. Because the additives have high boiling points and are relatively stable, the oily layer imparts a reasonably permanent lubricity to the surface. This lubricity allows facile connection and separation of closefitting components such as spark plug wires and caps even after prolonged exposure in the hostile environment of the engine compartment of an automobile. The extent of bleed often is unpredictable however, and sometimes no bleeding occurs.

A number of factors have been found to affect the amount of bleed shown by such compositions. Degree of bleed has been attributed to one or more of several variables such as the surface area of the fillers used the vinyl content of the silicone gums, the silanol content of process aids, filler-fluid interactions, and other factors. At times either the inherent variability of otherwise entirely satisfactory components of a composition or unrecognized interactions between components appear to have been responsible for excessive batch-to-batch or product-to-product variability in the extent of bleed. In extreme cases, one area of a molded article may show adequate bleed and another area none.

Therefore there is a need for additives for heat curable silicone rubber compositions which will afford a reliable extent of bleed or self-lubrication in the final product.

## SUMMARY OF THE INVENTION

Accordingly, it is an object of the invention to provide heat curable silicone rubber compositions comprising additives which afford improved self-bleeding, self-lubricating properties to the cured compositions using small amounts of the additives.

Another object of the invention is to provide heat curable silicone rubber compositions with improved self-bleeding properties by using small amounts of the additives of the present invention in combination with self-bleed additives known to the art.

Still another object of the invention is to provide self-bleeding heat curable silicone rubber compositions having improved heat aging properties.

The invention provides a self-bleeding heat curable silicone rubber composition comprising:

(a) 100 parts by weight of vinyl-containing organopolysiloxane polymers or vinyl-containing blends of organopolysiloxane polymers having a viscosity of from 1,000,000 to 300,000,000 centipoise at 25° C of the formula

$R_aSiO_{(4-a)/2}$ (1)

(b) from 0.1 to 10 parts of an organic peroxide curing catalyst, and

(c) a bleeding amount of a self-bleed additive comprising a silanol endstopped telomer having at least about 50 mole percent alkyl 3,3,3-trifluoropropylsiloxy groups and having an average degree of polymerization of from about 3 to about 12 siloxy groups.

## DETAILED DESCRIPTION OF THE INVENTION

The heat curable silicone rubbers used to form the products of the invention comprise one or more substantially linear polysiloxanes of the formula

$R_aSiO_{(4-a)/2}$ (1)

where each R individually is selected from the class consisting of alkyl radicals having 1 to 8 carbon atoms, vinyl radicals and phenyl radicals, wherein the vinyl radical concentration is at least 0.005 mole percent, a is a number from 1.98 to 2.01, at least 60% of the polysiloxanes comprise vinyl groups, and at least 80% of the R groups are methyl.

A vinyl-containing polysiloxane of formula (1) is present in the composition as a basic constituent, wherein the polymer contains at least 0.005 percent vinyl and preferably contains from 0.01 to 1 mole percent vinyl. Preferably, the polymer is linear, and broadly, the vinyl radicals can be on any part of the polymer chain. Irrespective of whether there is some polymer chain vinyl in the polymer, it is preferred that there be at least some terminal vinyl groups in the polymer. It is understood that this polymer can be a single polymer species or it can be a blend of predominantly vinyl containing polymer materials which can be different viscosities of anywhere from 20,000,000 to 300,000,000 centipoise at 25° C, with the final blend having a viscosity varying from 20,000,000 to 300,000,000 centipoise at 25° C.

Most preferably, the polymer of formula (1) has a viscosity that varies from 50,000,000 to 200,000,000 centipoise at 25° C. The other substituent groups in addition to the vinyl radical can be any monovalent hydrocarbon radicals, preferably not exceeding 10 carbon atoms. Most preferably, each R substituent group individually is selected from lower alkyl radicals of 1 to 8 carbon atoms, vinyl radicals and phenyl radicals. At least 80% of the R groups must be methyl.

A preferred polymer species within the scope of the vinyl containing polymer of formula (1) is a vinyl-containing polymer of formula (2)

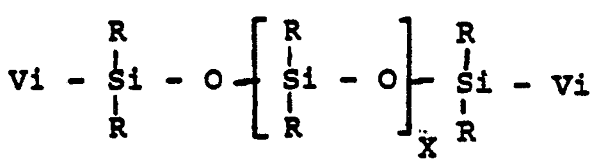

(2)

that is, where the polymer of the formula (1) is a linear polymer with vinyl radical terminal units. The value of x is from about 9,000 to about 12,000. This polymer or blend of such polymers may have a viscosity of anywhere from 20,000,000 to 300,000,000 centipoise at 25° C, but preferably is a polymer that has a viscosity of 50,000,000 to 200,000,000 centipoise at 25° C. It can be understood that when the polymers of formula (2) are utilized within those polymers of the scope of formula (1), that the polymers of formula (2) need not be a single polymer species but may be a blend a vinyl-containing polymers of the formula (2) of different viscosities. In this respect, it should be noted that some of the R radicals may be vinyl. It is possible to produce compositions within the instant invention where none of the R radicals are vinyl within the vinyl concentrations specified previously.

It should also be noted that for high viscosity systems it is preferred that the vinyl-containing polymers or blends of such polymers of formulas (1) and (2) have a viscosity of 50,000,000 to 200,000,000 centipoise at 25° C.

In the formula within the scope of formula (2), an individual R may be selected from vinyl and may be on any portion of the polymer chain within the scope of formula (2). However, only a minimal part of R radicals may be vinyl radicals in accordance with the disclosure set forth above. Preferably, each individual R is selected from the class consisting of phenyl and lower alkyl radicals of 1 to 8 carbon atoms. However, the R radicals may be selected from any monovalent hydrocarbon radicals. At least 80% of the R radicals must be methyl.

Other ingredients may be included in the basic polysiloxane composition of the instant case. A vinyl-containing polysiloxane of the formula (3) may be utilized as a reinforcing agent at a concentration of anywhere from generally 1 to 50 parts of preferably 1 to 25 parts per 100 parts of the basic vinyl-containing polymer of formulas (1) and (2) to give the final composition good physical strength.

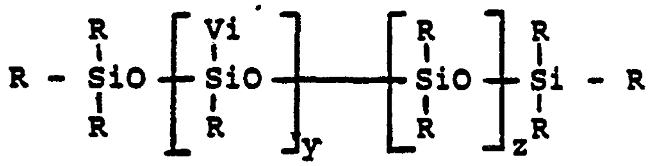 (3)

In formula (3), the vinyl units are only in the internal portion of the polymer chain. Again, the vinyl content of this polymer must be such that the vinyl concentration of the total vinyl-containing polymers be at least 0.005 mole percent and may vary anywhere from 0.01 to 1 mole percent. Although a higher vinyl content may be utilized, it serves no purpose and decreases the strength of the composition. In formula (3), Vi is vinyl, y varies from 1 to 4,000, z varies from 1 to 4,000, and the polymer has a viscosity that generally varies anywhere from 1,000 to 1,000,000 centipoise at 25° C, and more preferably varies from 50,000 to 500,000 centipoise at 25° C.

A minor amount of up to about 40 parts of the organopolysiloxane polymers of formula (1) may be a non-vinyl polysiloxane of the formula (4) utilized as a plasticizer,

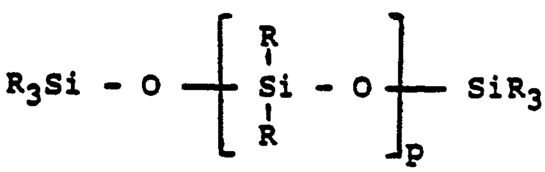 (4)

where R is as previously defined, p varies from about 9,000 to about 12,000 and the viscosity of the polymer in formula (3) may vary anywhere from 20,000,000 to 300,000,000 centipoise at 25° C.

In formulating the compositions of the invention herein, the total weight of polysiloxanes of formula (1), i.e. the sum of the weights of polysiloxanes of formulas (2), (3) and (4) is taken as 100, and the quantities of all other components are related thereto.

The polymers within the scope of formulas (1), (2), and (3) are well known. Reference is made to the patent of Jeram and Striker, U.S. Pat. No. 3,884,866, whose disclosure is hereby incorporated by reference. Such polymers are usually made by the equilibration of vinyl-containing cyclic polysiloxanes or vinyl containing chain stoppers at elevated temperatures to produce high viscosity vinyl-containing polymers. Such equilibration reactions are carried out with the use of alkali metal catalysts or in the case in the production of low viscosity vinyl-containing polymers by the use of acid catalysts such as toluene sulfonic acid or acid-activated clay. The polymers within the scope of formula (4) are articles of commerce, and may be prepared in the same fashion as above by merely omitting any vinyl-containing components and using triorganosiloxane endstoppers in the equilibration mixture.

In the compositions of the present invention there is also present per 100 parts of the organopolysiloxane polymer from 0.1 to 10 parts of "vinyl-specific peroxide" curing catalyst. The term "vinyl-specific peroxide" refers to the group of (di)alkyl peroxides which cause substantial cross-linking of polysiloxanes to occur only when vinyl groups are present in the polysiloxanes. If too little catalyst is utilized the composition will not cure to a silicone elastomer at elevated temperatures and if too much curing catalyst is used it serves no useful function. Preferably, there is utilized a concentration of a curing catalysts from 0.1 to 5 parts based on 100 parts of the diorganopolysiloxane polymer or blends of polymers.

A general formula of the vinyl-specific curing catalysts of the present invention is as follows:

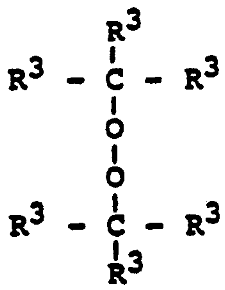

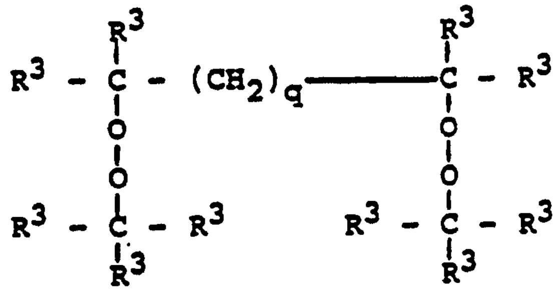

where $R^3$ represents the same alkyl group throughout or alkyl groups of two or more different types, with the proviso that one $R^3$ on each carbon atom may be hydrogen, and q is zero or a larger integer.

Among the specific peroxide curing catalysts that are preferred are diisopropyl peroxide di-tertiary-butyl peroxide, and tertiary-butyltriethylmethyl peroxide, tertiary-butyl-tertiary-triphenyl peroxide, and di-tertiary alkyl peroxides such as dicumyl peroxide. The preferred vinyl-specific curing catalyst is 2,5-bis(t-butylperoxy)-2,5- dimethylhexane.

Peroxide catalysts which effect curing through saturated as well as unsaturated hydrocarbon groups on the silicon chain such as aryl peroxides including benzoyl peroxides, mixed alkyl-aryl peroxides including tertiary-butyl perbenzoate, chloro peroxides such as 1,4-dichlorobenzoyl peroxide, 2,4-dichlorobenzoyl peroxide, monochlorobenzoyl peroxide, benzoyl peroxide, methylethyl-ketone peroxide, azo-bis-isobutyronitrile, etc. are not suitable for use in the present invention since reaction will then occur between the self-bleed additive(s) and the silicone gum(s), attaching the self-bleed additive to the rubber composition, thus making the additive unavailable for migration to the surface of the cured composition. Generally, 0.1 to 8 percent of said vinyl-specific peroxide by weight of the polydiorganosiloxane gum is used to cure the silicone rubber composition and preferably 0.5 to 3.0 percent by weight of the above curing catalyst, 2,5-bis(t-butylperoxy)-2,5-dimethylhexane is preferred.

The self-bleed additives of the invention comprise fluid linear silanol-terminated diorganosiloxane telomers which have boiling points at ambient pressure greater than about 300° C, a silanol content of at least about 2 weight %, contain at least about 50 mole percent alkyl 3,3,3-trifluoropropylsiloxy groups, and have an average degree of polymerization of from about 3 to about 12 siloxy groups. The additives are incompatible with cured organopolysiloxane rubbers in which methyl groups constitute at least 80 mole percent of the organic groups attached to siloxy groups.

The additives are represented by the formula (I)

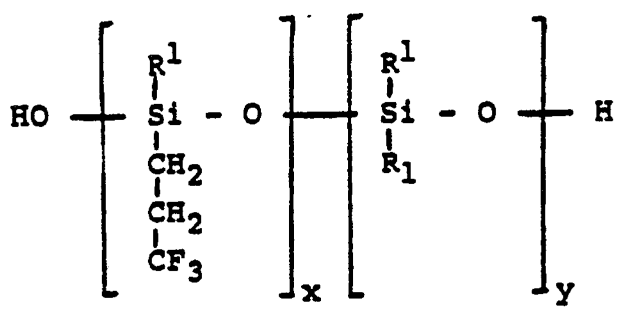 (I)

where each $R^1$ individually is selected from the class consisting of alkyl radicals of 1 to 8 carbon atoms and phenyl, x has an average value from about 3 to about 12, y has an average value from 0 to about 6, x + y is not more than about 12, and x is equal to or greater than y. More preferred are additives where y is zero. Still more preferred are additives where $R^1$ is methyl and y is zero. Most preferred are additives where $R^1$ is methyl, x is from about 3 to about 6, and y is zero.

The silanol-terminated telomers of formula (I) are prepared by the hydrolysis of cyclic telomers which contain disubstituted siloxy units corresponding to those desired in the silanol-terminated telomer. The hydrolysis is effected by reaction of a solution of the cyclic mer or mers with a stoichiometric quantity of water in the presence of an acid clay catalyst, neutralizing and removing the catalyst, and then stripping the solvent away from the resulting silanol-terminated telomer. A more detailed description of this process is given in U.S. Pat. No. 3,853,932 which is incorporated herein by reference.

As the degree of polymerization of the linear silanol-endblocked fluorosilicone telomer increases, the

efficiency of the telomer as a self-bleed additive decreases. It is not known with certainty what causes this loss of efficiency. Without wishing to be bound by any explanation, the applicants believe that as molecular weight increases, the mobility of the additive in the cured rubber composition decreases, leading to less bleeding. In addition, it appears that the weight percent silanol in the additive may also be significant, since compositions quite similar to those of the invention but having little or no silanol content are ineffective as bleed additives.

Because the self-bleed additives of formula (I) are relatively costly it is a preferred form of the invention to employ them in combination with the self-bleed additives used heretofore in the art. The Self-bleed additives of the prior art used as extenders in the present invention include alkoxy- or hydroxy-endstopped dimethylsiloxy, diphenylsiloxy cotelomers which comprise sufficient diphenylsiloxy groups to be poorly compatible with methyl HCR's. More particularly the preferred extenders have the general formula (II):

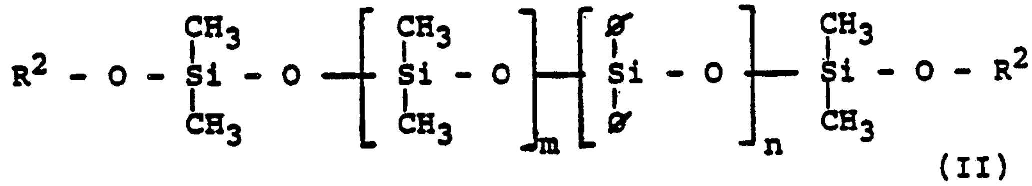

(II)

wherein $R^2$ is selected from the group consisting of alkyl radicals having from 1 to 4 carbon atoms and hydrogen, Ø is phenyl, m has an average value of not more than about 3n, n has an average value of at least about 1 and the sum m + n is such that the telomer (II) has a viscosity of from about 30 to 100 centipoise at 25° C. For the preferred telomer (II) $R^2$ is methyl, m is about 3, n is about 1, and the viscosity of the telomer (II) is about 40 to 60 cps at 25° C.

Because of the large number and wide range of variables involved in formulating heat curable silicone rubber compositions, and the variation in the amount of bleeding desired in the final product, some experimentation may be required to determine the bleeding amount of self-bleeding additive(s) to use in a particular formulation of the invention. In general, when using the self-bleed additives of formula (I) alone, it usually will be necessary to employ at least about five parts of additive per hundred parts of silicone gum(s) in the formulation. If more than about 10 parts of additive per hundred parts of gum(s) is used, the amount of bleeding may be greater than is desired in some applications. When fluorosilicon telomer (I) is extended with a dimethyl-, diphenyl- telomer of the formula (II) in compositions, adding a minor amount of as little as about one-half to one part of fluorosilicon telomer (I) to from about 6 to about 10 parts of the telomer (II) per hundred parts of silicone gum(s) has been found sufficient to achieve significant improvement in bleeding. Naturally, as the amount of telomer (I) is increased, the amount of telomer (II) required for good results will decrease. When the amount of telomer (I) reaches about 5 parts, there is usually little need to include any telomer (II).

When preparing the basic composition of the diorganosiloxane, peroxide curing catalyst and self-bleed additive, it must be pointed out that the peroxide curing catalyst generally is added to the composition in a final mixing step prior to cure.

Other materials may be included in the formulation of the heat curable silicone rubber compositions of the invention.

Fillers may be added in accordance with the present invention, generally from 25 to 60 parts of a reinforcing silica filler selected from the class consisting of fumed silica, precipitated silica, and mixtures thereof. If less than 25 parts of silica filler is utilized and specifically the reinforcing type of silica filler, then the composition will not have as advantageous resistance to oils. If more than 60 parts of extending silica filler is utilized the composition may not have sufficient elongation in the desired range. Most preferably, from 30 to 50 parts of reinforcing silica filler selected from the class consisting of fumed silica and precipitated silica is utilized. The reinforcing silica filler that is utilized in the present invention may be treated or untreated. Most if not all of it, is treated either in situ in preparing the composition of the present invention or prior to incorporation into the diorganopolysiloxane polymer. The reinforcing silica fillers are most commonly treated with cyclic polysiloxanes as, for instance, disclosed in Lucas, U.S. Pat. No. 2,938,009 whose disclosure is incorporated into the present case by reference. Silica fillers are also advantageously treated with a mixture of cyclic polysiloxanes and silazanes as well as such compounds of ammonia and amines as, for instance, disclosed in Smith, U.S. Pat. No. 3,635,743, whose disclosure is hereby incorporated into the present case by reference, or as disclosed in Beers Pat. No. 3,837,878. The reinforcing silica filler may also be treated in situ when the untreated reinforcing silica filler is incorporated

into the diorganopolysiloxane polymer by adding from 2 to 20 parts lends of such diorganopolysiloxane polymers, of cyclic polysiloxanes and/or silazanes and other treating agents and cooking the resulting mixture at elevated temperatures. It also can be appreciated the reinforcing silica fillers may not only be composed solely of fumed silica or precipitated silica but may be a mixture of these fillers whether they are treated or untreated.

Along with the reinforcing silica filler from 5 to 80 parts of an inorganic filler and preferably from 10 to 50 parts of an inorganic filler selected from the class consisting of titanium, iron oxide, aluminum oxide, diatomaceous earth, calcium carbonate, ground silica, quarts, diatomaceous silica, aluminum silicate, zinc oxide, chrominum silicate, barium sulfate, zinc sulfide, aluminum silicate, finely divided silica having surface bonded alkoxy groups, and mixtures thereof may be used. It is obvious that this above list of inorganic fillers that may be utilized in the present invention is not all inclusive. Any other inorganic fillers that are commonly utilized in producing heat vulcanizable silicone rubber compositions may be utilized alone or with the other fillers set forth above at a concentration of generally 5 to 80 parts per 100 parts of diorganopolysiloxane polymer. If more than 80 parts of inorganic filler is utilized, then the resulting cured elastomer may not have the desired elongation and compression set.

From 0.1 to 15 parts of an ingredient selected from the class consisting of magnesium oxides and mixtures of various magnesium oxides of various particle sizes may be used as disclosed in Christie, U.S. Pat. No. 3,865,778. More preferably, a concentration of magnesium oxide at a level of 0.5 to 10 parts per 100 parts of the diorganopolysiloxane polymer blends of such polymers is used. If less than 0.1 parts of the magnesium oxide is utilized, then resistance to hydrocarbon oils of the final cured silicone elastomer, and particularly resistance to used engine oils, is not obtained. If more than 15 parts of the magnesium oxide is used per 100 parts of the diorganopolysiloxane polymer, then the excess magnesium oxide serves no useful purpose and in addition tends to affect the physical properties of the cured silicone elastomer deleteriously.

In addition to the above ingredients, it is common to add various other ingredients to heat vulcanizable silicone rubber compositions as processing aids, for the purpose of improving the properties of the heat cured silicone elastomer, as well as to add color and various other incidentals such as tracing properties to the cured silicone elastomer. These ingredients are disclosed at length in the aforementioned U.S. Pat. No. 3,865,778.

In preparing the compositions of the present case the following procedure is exemplary. First, the polymer or blend of polymers is put into a doughmixer, Banbury or the like and mixed to polymer uniformity. Then any non-reinforcing fillers, that is, inorganic fillers and process aids or heat stabilizers, are added to the polymer and mixed to uniformity. Then any fumed silica or precipitated silica is added. Then bleed additive and any other ingredients are added to the doughmixer and mixed until the composition is uniform. The composition may then be strained through a 100 mesh screen to remove impurities. This composition may then be milled on the rubber mill to add the proper amount of catalyst and then is formed into the desired shape. Then it is cured at an elevated temperature of 150° to 300° C for a period of from a few seconds to several hours to form the desired silicone elastomer.

After curing, the heat curable silicone rubber compositions of the invention will begin to bleed forming a thin film or layer of the self-bleed additive on the surface of the article formed from the composition. This bleeding is apparent within 24 hours in a composition of the invention.

The examples given below are given for the purpose of illustrating the present invention and are not given for the purpose of defining or limiting the scope of the present invention. All parts in the examples are by weight.

## RUBBER INGREDIENTS

### Silicone Gum 1

A dimethylsiloxy, methylvinylsiloxy, dimethylvinylsiloxy-endstopped copolymer gum, having 0.05 mole % vinyl on chain, penetration of 1000-1600.

### Silicone Gum 2

A trimethylsiloxy-endstopped polydimethylsiloxane polymer gum, penetration of 800-1500.

Silicone Gum 3

Similar composition to Silicone Gum 1, but with 0.2 mole % vinyl on chain, penetration of 600-1000.

Hi Sil 900 and Hi Sil 135

Precipitated silicas supplied by PPG Industries.

FK-160, FK-161 and EXP 140

Precipitated silicas supplied by Degussa Corp.

Silanol Fluid (Processing Aid)

A silanol-endblocked dimethylsiloxane polymer containing about 9 dimethylsiloxy units.

Silazane

Divinyltetramethyldisilazane

MgO

Magnesium oxide (75%) in polydimethylsiloxane oil (25%).

Heat Stabilizer

Product sold by General Electric as SE-6916-HA.

Bleed Additives Tested

Additives A, B and C are not within the scope of the invention.

Additive A

Methoxy-endstopped 3:1 (molar) dimethylsiloxy, diphenylsiloxy copolymer, viscosity less than 25 cps @ 25° C.

Additive B

Methyltrifluoropropyldichlorosilane hydrolyzate having 2% silanol content, 40% linear silanol endblocked telomer, 60% cyclic polysiloxanes.

Additive C

Trimethylsiloxy-endstopped 5:1 (molar) dimethylsiloxy, methyltrifluoropropylsiloxy copolymer, viscosity

76 cps @ 25° C, density 1.03 g/cc.

Additive 1

Linear silanol-endblocked methyltrifluoropropylsiloxane trimer containing small amounts of higher mers, silanol content 6.99% (pure) to 6% depending on content of higher mers.

Additive 2

Linear silanol-endblocked methyltrifluoropropylsiloxane hexamer containing small amounts of higher mers, silanol content 3.8%, viscosity 210 cps @ 25° C.

Additive 3

Linear silanol-endblocked methyltrifluoropropylsiloxane octamer containing small amounts of 6-12 mers, silanol content 2.6%, viscosity 280 cps @ 25° C.

## PREPARATION OF RUBBERS

Rubber formulations were prepared by charging one half of the silica filler to a Banbury mixer, then charging the silicone gums, followed by the divinyltetramethyldisilazane and vinyl tris (2-methoxyethoxy) silane. Any magnesium oxide used was then added followed by the low molecular weight silanol terminated process aid and the bleed additive or additives being evaluated. Finally, the balance of the silica filler was added. When the formulation was completely mixed, the Banbury was discharged and the formulation was incorporated on a 2-roll mill. The material then was allowed to age for at least 24 hours. After aging, the formulation was again sheeted on a two-roll mill, and any colorant and 1.2% by weight on total mixture of 2,5-bis(t-butylperoxy)-2,5-dimethylhexane (Peroxide) was added. The completed formulation then was placed in a mold and cured at 350° Fahrenheit for 15 minutes. Samples were allowed to age for 24 hours before testing. All quantities are parts by weight.

## EXAMPLES 1 & 2, COMPARATIVE EXAMPLES A & B

Rubber compositions using the formulations shown in Table I were prepared by the method given above, cured with added Peroxide, and evaluated.

TABLE I

| | Ex. 1 | Comp. Ex. A | Ex. 2 | Comp Ex. B |
|---|---|---|---|---|
| | Parts by Weight | | | |
| Silicone Gum 1 | 70 | 70 | 70 | 70 |
| Silicone Gum 2 | 20 | 20 | 18 | 18 |
| Silicone Gum 3 | 10 | 10 | 12 | 12 |
| Silanol Fluid | 3 | 3 | 3 | 3 |
| Silazane | 0.063 | 0.063 | 0.063 | 0.063 |
| Silane | 1 | 1 | 1 | 1 |
| Hi Sil 900 | 18.2 | 18.2 | 18.2 | 18.2 |
| FK 161 | 18.3 | 18.3 | 18.3 | 18.3 |
| Additive A | 7 | 9 | 7 | 9 |
| Additive 1 | 2 | - | 2 | - |
| Physical Properties: | | | | |
| Shore A | 31 | 32 | 31 | 34 |
| Tensile strength, psi | 957 | 957 | 1002 | 960 |
| Elongation, % | 718 | 701 | 668 | 670 |
| Tear, B, pi | 56 | 54 | 57 | 55 |
| Modulus, 100% | 81 | 83 | 88 | 94 |
| Specific Gravity | 1.126 | 1.125 | 1.126 | 1.124 |
| Bleed, 24 hours | V. Good | Slight | V. Good | Slight |
| Compression set, 70 hr./300° F | 17.6 | 17.3 | 15.8 | 13.9 |
| Heat Age, 70hr./300° F | | | | |
| Shore A | +2.0 | +4.0 | +2.0 | +5.0 |
| Tensile | +1.6% | -11.4% | -4.4% | -0.9% |
| Elongation | -3.9% | -8.7% | +0.9% | +1.9% |

These examples show that the replacement of a relatively small amount of Additive A with an additive of the invention (Additive I) leads to a marked improvement in the self-bleeding characteristics of a heat curable silicone rubber. Improved heat aging characteristics are also observed.

## EXAMPLE 3 AND COMPARATIVE EXAMPLES C & D

These compositions shown in Table II were prepared, cured and evaluated.

TABLE II

| | Ex. 3 | Comp. Ex. C | Comp Ex. D |
|---|---|---|---|
| | Parts by Weight | | |
| Silicone Gum 1 | 70 | 70 | 70 |
| Silicone Gum 2 | 18 | 18 | 18 |
| Silicone Gum 3 | 12 | 12 | 12 |
| Silanol Fluid | 3.1 | 3.1 | 3.1 |
| Silazane | 0.063 | 0.063 | 0.063 |
| Silane | 1.0 | 1.0 | 1.0 |
| Hi Sil 135 | 18.2 | 18.2 | 18.2 |
| FK 161 | 18.3 | 18.3 | 18.3 |
| MgO | 1.2 | 1.2 | 1.2 |
| Heat Stabilizer | 1.2 | 1.2 | 1.2 |
| Additive A | 7.9 | 7.9 | 7.9 |
| Additive B | - | 1.0 | - |
| Additive C | - | - | 1.0 |
| Additive 1 | 1.0 | - | - |
| Physical Properties: | | | |
| Shore A | 35 | 36 | 25 |
| Tensile strength, psi | 1022 | 1042 | 814 |
| Elongation, % | 827 | 967 | 861 |
| Tear, B, pi | 75 | 66 | 98 |
| Modulus, 100% | 95 | 98 | 70 |
| Specific Gravity | 1.130 | 1.133 | 1.136 |
| Bleed, 24 hours | Yes | None | Slight |
| Compression set, 70 hr./300° F | 16.5 | 17.1 | - |
| Heat Age, 70hr./300° F | | | |
| Shore | +3 | +3 | - |
| Tensile | -1.5% | +15.2% | - |
| Elongation | -10.5% | -17.0% | - |

These examples show that if additives similar to an additive of the invention but having a significant cyclic content (Additive B) or no silanol content (Additive C) are used at the same level as Additive 1 in mixtures with Additive A little or no enhancement of bleeding occurs.

## EXAMPLES 4-6

A gum stock was prepared by the standard method according to the following formulation:

| | Parts by Weight |
|---|---|
| Silicone Gum 1 | 70 |
| Silicone Gum 2 | 18 |
| Silicone Gum 3 | 12 |
| Silanol Fluid | 3.1 |
| Silazane | 0.063 |
| Silane | 1.0 |
| Hi Sil 135 | 18.2 |
| EXP 140 | 18.3 |
| MgO | 1.2 |
| Heat Stabilizer | 1.2 |
| Additive A | 7.9 |

Four portions of this gum stock were compounded with 1 part of additional additive plus 1.2% Peroxide on total mixture and then cured. The results are shown in Table III.

TABLE III

| | Ex. 4 | Ex. 5 | Ex. 6 |
|---|---|---|---|
| | Parts by Weight | | |
| Additive 1 | 1.0 | - | - |
| Additive 2 | - | 1.0 | - |
| Additive 3 | - | - | 1.0 |
| Physical Properties: | | | |
| Shore A | 31 | 26 | 31 |
| Tensile strength, psi | 958 | 845 | 870 |
| Elongation, % | 775 | 896 | 765 |
| Tear, B, pi | 64 | 64 | 89 |
| Modulus, 100% | 86 | 70 | 78 |
| Specific Gravity | 1.135 | 1.137 | 1.139 |
| Bleed, 24 hours | Good | Fair | Good |

These examples show that methyl 3,3,3-trifluoropropylsiloxy telomers having silanol contents as low as 2.6% give good self-bleed results when extended with Additive A.

EXAMPLES 7-9

The following formulation omitting bleed additives was compounded by the standard method.

| | Parts by Weight |
|---|---|
| Silicone Gum 1 | 70 |
| Silicone Gum 2 | 18 |
| Silicone Gum 3 | 12 |
| Silanol Fluid | 3.1 |
| Silazane | 0.063 |
| Silane | 1.0 |
| Hi Sil 135 | 18.2 |
| EXP 140 | 18.3 |
| MgO | 1.2 |
| Heat Stabilizer | 1.2 |

Three portions of this gum stock were compounded with the indicated parts by weight of Additive 1 plus 1.2% by weight Peroxide on total mixture and then cured. The results are shown in Table IV.

TABLE IV

| | Ex. 7 | Ex. 8 | Ex. 9 |
|---|---|---|---|
| Parts Additive 1 | 4 | 6 | 8 |
| Physical Properties: | | | |
| Shore A | 36 | 35 | 33 |
| Tensile strength, psi | 940 | 918 | 910 |
| Elongation, % | 630 | 643 | 654 |
| Tear, B, pi | 46 | 53 | 60 |
| Modulus, 100% | 104 | 100 | 94 |
| Specific Gravity | 1.142 | 1.145 | 1.147 |
| Bleed, 24 hours | None | Moderate | Copious |

These examples show that it usually will be necessary to use more than about 4 parts of an additive of the invention for good self-bleeding properties in cured heat curable silicone rubbers.

The foregoing is given only by way of example, and those skilled in the art will recognize that various modifications, substitutions, omissions, and changes may be made without departing from the scope of the invention. Accordingly, it is intended that the scope of the invention be limited solely by the scope of the following claims.

## Claims

1. A heat curable organosilicon rubber composition comprising:

A) 100 parts by weight of one or more substantially linear polysiloxanes of the formula

$R_aSiO_{4-a/2}$

wherein each R individually is selected from the class consisting of alkyl radicals having 1 to 8 carbon atoms, vinyl radicals and phenyl radicals wherein the vinyl radical concentration is at least 0.005 mole percent, a is a number from 1.98 to 2.01, at least 60% of the polysiloxanes comprise vinyl groups, and R comprises at least 80 mole percent methyl radicals;

B) 0.1 to about 10 parts of an alkyl peroxide curing catalyst; and

C) a bleeding amount of a self-bleed additive comprising a silanol-terminated diorganosiloxane telomer of the formula (I)

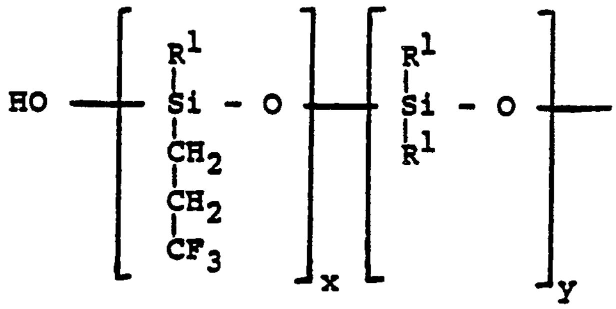

(I)

having a silanol content of at least about 2 weight percent wherein each $R^1$ individually is selected from the class consisting of alkyl radicals of 1 to 8 carbon atoms and phenyl, x has an average value from about 3 to about 12, y has an average value from 0 to about 6, x + y is not more than about 12, and x is equal to or greater than y.

2. The composition of claim 1 wherein y is zero.

3. The composition of claim 1 or claim 2 wherein $R^1$ is methyl.

4. The composition of claim 3 wherein x is from about 3 to about 6.

5. The cured composition of claim 1.

6. A heat curable organosilicon rubber composition comprising:

A) 100 parts by weight of one or more substantially linear polysiloxanes of the formula

$R_aSiO_{4-a/2}$

wherein each R individually is selected from the class consisting of alkyl radicals having 1 to 8 carbon atoms, vinyl radicals and phenyl radicals wherein the vinyl radical concentration is at least 0.005 mole percent, a is a number from 1.98 to 2.01, at least 60% of the polysiloxanes comprise vinyl groups, and R comprises at least 80 mole percent methyl radicals;

B) 0.1 to about 10 parts of an alkyl peroxide curing catalyst; and

C) a bleeding amount of a self-bleed additive selected from the group consisting of:

i) from about 5 to about 10 parts of silanol-terminated diorganosiloxane telomer of the formula (I)

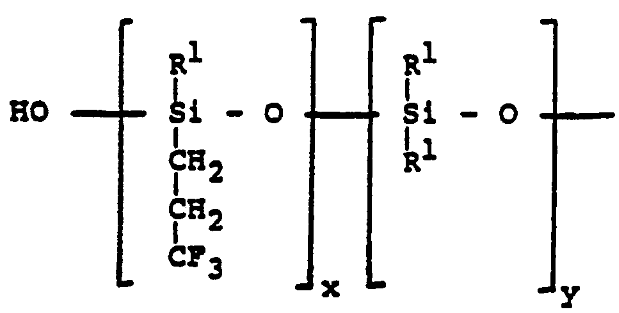

(I)

having a silanol content of at least about 2 weight percent wherein each $R^1$ individually is selected from the class consisting of alkyl radicals of 1 to 8 carbon atoms and phenyl, x has an average value from about 3 to about 12, y has an average value from 0 to about 6, x + y is not more than about 12, and x is equal to or greater than y; and

ii) mixtures of a minor amount of at least 0.5 part of a silanol-terminated telomer of the formula (I) with from about 6 to about 10 parts of a diorganosiloxane telomer of the formula (II)

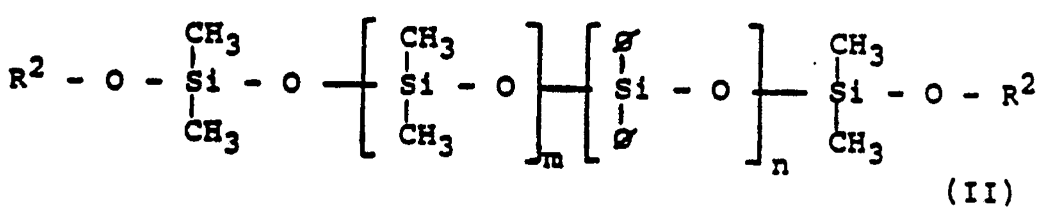

(II)

wherein $R^2$ is selected from the group consisting of alkyl radicals having from 1 to 4 carbon atoms and

hydrogen, Ø is phenyl, m has an average value of not more than about 3n, n has an average value of at least about 1, and the sum m + n has a value such that said telomer (II) has a viscosity from about 30 to about 100 centipoise at 25° C.

7. The composition of claim 5 wherein y is zero.

8. The composition of claim 6 or claim 7 wherein $R^1$ is methyl.

9. The composition of claim 8 wherein x is from about 3 to about 6.

10. The cured composition of claim 6.

11. A heat curable organosilicon rubber composition comprising:

A) 100 parts by weight of one or more substantially linear polysiloxanes of the formula

$R_aSiO_{4-a/2}$

wherein each R individually is selected from the class consisting of alkyl radicals having 1 to 8 carbon atoms, vinyl radicals and phenyl radicals wherein the vinyl radical concentration is at least 0.005 mole percent, a is a number from 1.98 to 2.01, at least 60% of the polysiloxanes comprise vinyl groups, and R comprises at least 80 mole percent methyl radicals;

B) 0.1 to about 10 parts of an alkyl peroxide curing catalyst; and

C) a bleeding amount of a self-bleed additive comprising a minor amount of at least about 1 part of silanol-terminated diorganosiloxane telomer of the formula (I)

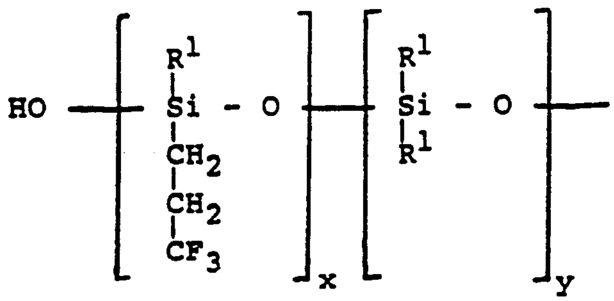

(I)

having a silanol content of at least about 2 weight percent wherein each $R^1$ individually is selected from the class consisting of alkyl radicals of 1 to 8 carbon atoms and phenyl, x has an average value from about 3 to about 12, y has an average value from 0 to about 6, x + y is not more than about 12, and x is equal to or greater than y; with from about 6 to about 10 parts of a diorganosiloxane telomer of the formula (II)

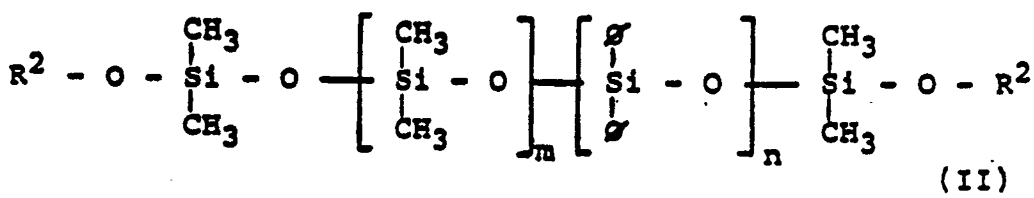

(II)

wherein $R^2$ is selected from the group consisting of alkyl radicals having from 1 to 4 carbon atoms and hydrogen, Ø is phenyl, m has an average value of not more than about 3n, n has an average value of at least about 1, and the sum m + n has a value such that said telomer (II) has a viscosity from about 30 to about 100 centipoise at 25° C.

12. The cured composition of claim 11.